# EUROPÄISCHE PATENTSCHRIFT

(11) **EP 1 536 678 B1**
(45) Veröffentlichungstag und Bekanntmachung des Hinweises auf die Patenterteilung: **13.12.2006**
(21) Anmeldenummer: 03793619.2
(22) Anmeldetag: 16.07.2003
(51) Int. Cl.: A01B 63/26

(54) **HALTERUNGSEINRICHTUNG**
FIXING DEVICE
DISPOSITIF DE FIXATION

(30) Priorität: 14.08.2002 US 218646
(43) Veröffentlichungstag der Anmeldung: 08.06.2005
(73) Patentinhaber: DEERE & COMPANY, Moline, Illinois 61265-8098 (US)
(72) Erfinder: MARIMAN, Nathan, Albert, Geneseo, IL 61254 (US); STOEHR, Randall, William, Rock Island, IL 61201 (US)
(74) Vertreter: Holst, Sönke
(86) Internationale Anmeldenummer: PCT/EP2003/007726
(87) Internationale Veröffentlichungsnummer: WO 2004/021762

(56) Entgegenhaltungen:
- GB-A- 641 519
- US-A- 4 738 317
- US-A- 5 398 771
- US-A- 5 685 245

## Beschreibung

### Technisches Gebiet

Die Erfindung betrifft eine Halterungseinrichtung für eine Säeinheit, mit einem Parallelogrammgestänge, welches eine obere und eine untere Führungsstrebe aufweist, und einer Arretierungsstrebe, welche sich zwischen der oberen und der unteren Führungsstrebe erstreckt. Die Arretierungsstrebe ist schwenkbar auf einer oberen Schwenkachse an die obere Führungsstrebe montiert und weist einen Haken auf. Die untere Führungsstrebe enthält ein Führungsteil, welches gegen die Arretierungsstrebe lagert. Des Weiteren enthält die Halterungseinrichtung ein Stellglied.

### Stand der Technik

Säeinheiten sind üblicherweise über ein Parallelogrammgestänge an einen Werkzeugträger gekoppelt, so dass sich die Säeinheiten relativ zum Werkzeugträger in begrenztem Maße vertikal bewegen können. Gelegentlich möchte ein Landwirt eine oder mehrere der Säeinheiten deaktivieren oder sperren. Zum Beispiel könnte ein Landwirt mit Säeinheiten für Reihen mit einem Abstand von 15 Zoll für Sojabohnen diese auf Reihen für Mais mit einem Abstand von 30 Zoll umstellen wollen. Der Landwirt würde jede zweite Säeinheit abstellen, um den Mais zu säen.

Halterungseinrichtungen sind im Stand der Technik bekannt. Ein Beispiel ist in der US 4 738 317 A offenbart.

Bei den bekannten Halterungseinrichtungen wirkt sich problematisch aus, dass diese platzraubend, aufwändig in der Gestaltung und umständlich in der Handhabung sind.

### Aufgabe der Erfindung

Die der Erfindung zu Grunde liegende Aufgabe wird darin gesehen, eine Halterungseinrichtung der eingangs genannten Art vorzugeben, durch welches die vorgenannten Probleme überwunden werden.

### Beschreibung der Erfindung

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Halterungseinrichtung der eingangs genannten Art mit einem Stellglied versehen, welches schwenkbar zwischen der oberen Schwenkachse und dem Haken an die Arretierungsstrebe gekoppelt und in Richtung der unteren Führungsstrebe durch eine Feder vorgespannt ist. Das Stellglied weist zwei Stellungen zum Eingreifen in die Arretierungsstrebe auf, eine Normalstellung, in der das Stellglied den Haken der Arretierungsstrebe vom Führungsteil weg vorspannt und eine Haltestellung, in der das Stellglied den Haken der Arretierungsstrebe zum Führungsteil hin vorspannt.

Die Halterungseinrichtung erstreckt sich zwischen der oberen und der unteren Führungsstrebe des Parallelogrammgestänges. Die Halterungseinrichtung enthält die Arretierungsstrebe und das Stellglied. Die Arretierungsstrebe ist schwenkbar an die obere Führungsstrebe gekoppelt und erstreckt sich in Abwärtsrichtung zur unteren Führungsstrebe. Das Stellglied ist gegenüber der Arretierungsstrebe durch die Feder vorgespannt, welche sich vom Stellglied zur unteren Führungsstrebe erstreckt. Die Arretierungsstrebe ist des Weiteren mit einer Aussparung versehen, welche den Haken enthält. Das Stellglied ist mit einem Arretierungselement versehen, welches in die Arretierungsstrebe eingreift. Das Arretierungselement des Stellglieds greift in eine von den zwei Stellungen, der Normalstellung und der Haltestellung, in die Arretierungsstrebe ein. In der Normalstellung greift das Arretierungselement in eine an der Arretierungsstrebe ausgebildeten Öffnung ein. In der Haltestellung greift das Arretierungselement an die Seitenkante der Arretierungsstrebe an. Das Stellglied ist über eine spielbehaftete Schwenkverbindung schwenkbar an die Arretierungsstrebe gekoppelt. Eine Gleitbuchse ist an die untere Führungsstrebe montiert und greift in die Aussparung ein. In der Normalstellung wird der Haken mittels des Arretierungselements durch das Stellglied von der Gleitbuchse weg vorgespannt. In der Haltestellung wird der Haken mittels des Arretierungselements durch das Stellglied zur Gleitbuchse hin vorgespannt. Das Stellglied ist mit einer Betätigungseinrichtung zum Umschalten des Stellglieds zwischen den beiden Stellungen versehen. Das Stellglied ist zwischen einem linken und einem rechten Parallelogrammgestänge positioniert. Nur die Betätigungseinrichtung erstreckt sich außerhalb des Parallelogrammgestänges, wodurch die Breitenerfordernis für die Halterungseinrichtung reduziert wird.

### Beschreibung der Zeichnung

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer Säeinheit in ihrer Normalstellung,
- Fig. 2: eine Seitenansicht der Säeinheit in ihrer Haltestellung und

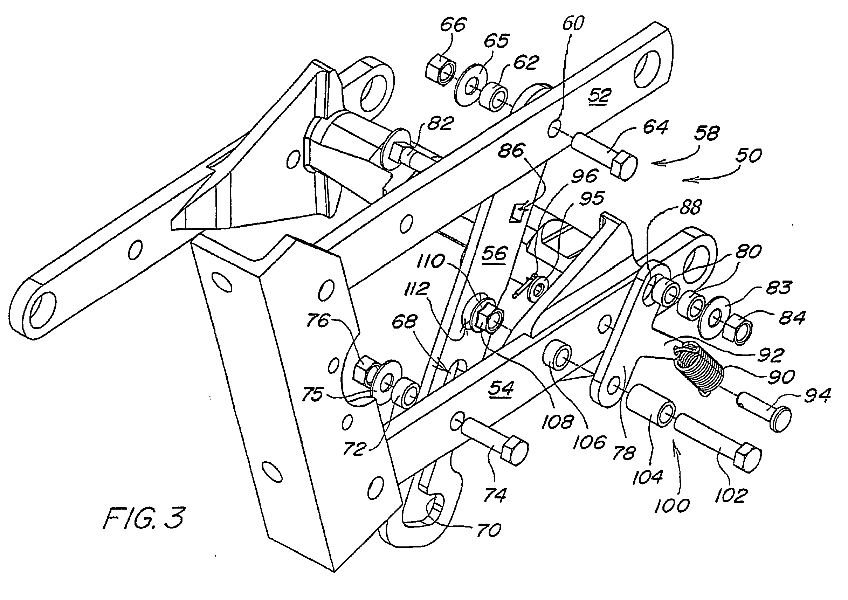

- Fig. 3: eine auseinandergezogene Darstellung einer Halterungseinrichtung.

### Detaillierte Beschreibung zur Ausführung der Erfindung

Eine Sämaschine 10 enthält eine einzelne Reihensäeinheit, welche mittels U-förmiger Schrauben, die mit einer Montageplatte 12 in Eingriff stehen, an einen querliegenden Werkzeugträger (nicht gezeigt) montiert ist. Die Säeinheit ist mit einem Rahmen 14 versehen, der über ein Parallelogrammgestänge 16 an die Montageplatte 12 gekoppelt ist. Das Parallelogrammgestänge 16 erlaubt ein begrenztes Heben und Senken der Säeinheit relativ zum Werkzeugträger. Durch ein pneumatisches bedarfsgesteuertes Saatgutabgabesystem wird automatisch Saatgut zu der Säeinheit geleitet. Das bedarfsgesteuerte Saatgutabgabesystem leitet das Saatgut pneumatisch von einem Hauptbehälter (nicht gezeigt) durch einen Saatgutschlauch zu einem auf dem Rahmen 14 montierten Hilfsbehälter 20. Das im Hilfsbehälter 20 befindliche Saatgut wird mittels einer Dosiervorrichtung 22 dosiert und durch ein Saatgutrohr in eine Säfurche geleitet (nicht gezeigt).

Die Säfurche wird durch einen Doppelscheiben-Furchenöffner 24 mit Tiefeneinstellrädern 26 geformt. Die Tiefe der Säfurche wird durch Positionierung des Hebels 28 eingestellt, mit dem die vertikale Position der Tiefeneinstellräder 26 relativ zum Furchenöffner 24 regulierbar ist. Die Säfurche mit dem durch das Saatgutrohr darin abgelegten, dosierten Saatgut wird mittels Furchenschließrädern 30 geschlossen.

Die Dosiervorrichtung 22 wird durch eine flexible drehbare Antriebswelle (nicht gezeigt), welche ein Getriebe 34 antreibt, angetrieben. Die flexible und drehbare Antriebswelle entspricht einer Ausführung, wie sie von der Elliot Manifacturing Company, LLC, Bermingham, New York hergestellt und vermarktet wird. Ein durch Bodenhaftung angetriebenes Getriebe (nicht gezeigt) liefert ein Eingangsdrehmoment an die flexible Antriebswelle. Auf diese Weise wird die Drehzahl der Dosiervorrichtung 22 durch die Fahrgeschwindigkeit der Sämaschine 10 gesteuert.

Gelegentlich möchte ein Landwirt eine oder mehrere Säeinheiten in einer angehobenen Nichtbetriebsstellung verriegeln. Aus diesem Grund ist eine Halterungseinrichtung 50 für die Säeinheit an das Parallelogrammgestänge 16 montiert. Das Parallelogrammgestänge 16 enthält eine obere und eine untere Führungsstrebe 52, 54. Die Arretierungsstrebe 56 erstreckt sich zwischen der oberen und der unteren Führungsstrebe 52, 54. Die Arretierungsstrebe 56 ist schwenkbar auf einer Hauptschwenkachse 58 gelagert. Die Arretierungsstrebe 56 ist mit einer Hauptschwenkachsenöffnung versehen, welche mit einer Öffnung 60 an der oberen Führungsstrebe 52 ausgerichtet ist. Eine Lagerbuchse 62 ist in der Hauptschwenkachsenöffnung positioniert und mittels eines Hauptschwenkachsenbolzens 64, einer Unterlegscheibe 65 und einer Gewindemutter 66 befestigt. Die Arretierungsstrebe 56 ist mit einer J-förmigen Aussparung 68 versehen, welche einen Haken 70 enthält. Innerhalb der Aussparung 68 ist eine Gleitbuchse 72 verschiebbar gelagert. Die Gleitbuchse ist mittels eines Führungsbolzens 74, einer Unterlegscheibe 75 und einer Gewindemutter 76 gegenüber der Aussparung 68 gesichert.

Ein Stellglied 78 ist schwenkbar auf der Arretierungsstrebe 56 durch Schwenkbuchsen 80 gelagert, welche an die Arretierungsstrebe 56 mittels eines Trägerbolzens 82, einer Unterlegscheibe 83 und einer Gewindemutter 84 montiert sind. Der Trägerbolzen 82 wird von einer quadratischen Öffnung 86 in der Arretierungsstrebe 56 aufgenommen. Die Schwenkbuchsen 80 werden von einer spielbehafteten Langlochöffnung 88 aufgenommen. Das Spiel dieser Öffnung 88 relativ zu den Schwenkbuchsen 80 ermöglicht dem Stellglied 78 von der Arretierungsstrebe 56 weggeschwenkt zu werden, wie später genauer beschrieben wird. Das Stellglied 78 wird mittels einer Feder 90 gegenüber der unteren Führungsstrebe 54 gespannt. Die Feder 90 wird auf einen Arm 92 des Stellglieds 78 angehängt und mittels eines Stiftes 94, einer Unterlegscheibe 95 und eines Federsteckers 96 an der unteren Führungsstrebe 54 verankert.

Das Stellglied 78 ist des Weiteren mit einer kombinierten Betätigungs- und Arretierungseinrichtung 100 versehen. Der Betätigungsteil der Betätigungs- und Arretiereinrichtung 100 wird durch einen Montagebolzen 102 und eine Abstandshülse 104 ausgebildet. Der Montagebolzen 102 durchläuft das Stellglied 78 und eine Buchse 106 und steht mit einer Arretierungsgewindemutter 108 in Eingriff. Die Arretierungsgewindemutter 108 ist mit einem sich nach außen erstreckenden Arretierungsrand 110 versehen. Der Montagebolzen 102, die Buchse 106 und die Arretierungsgewindemutter 108 formen den Arretierungsteil der Betätigungs- und Arretiereinrichtung 100.

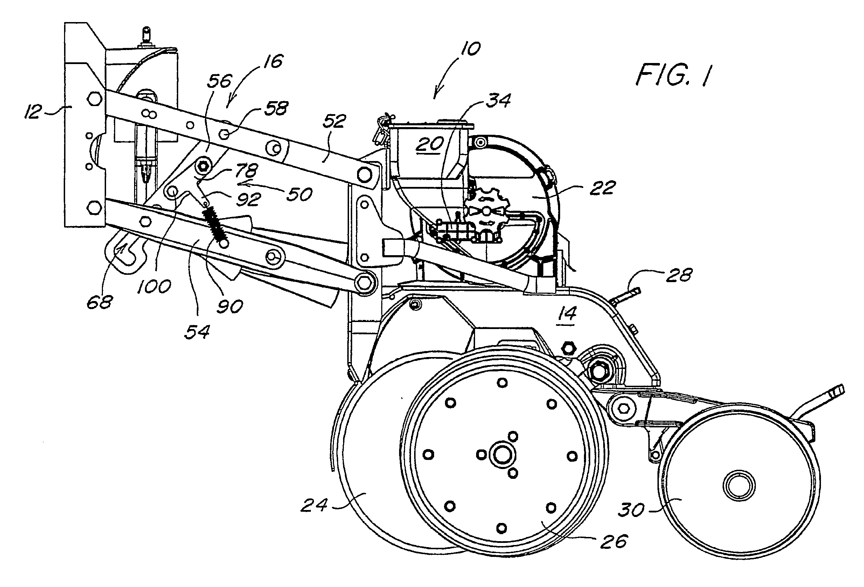

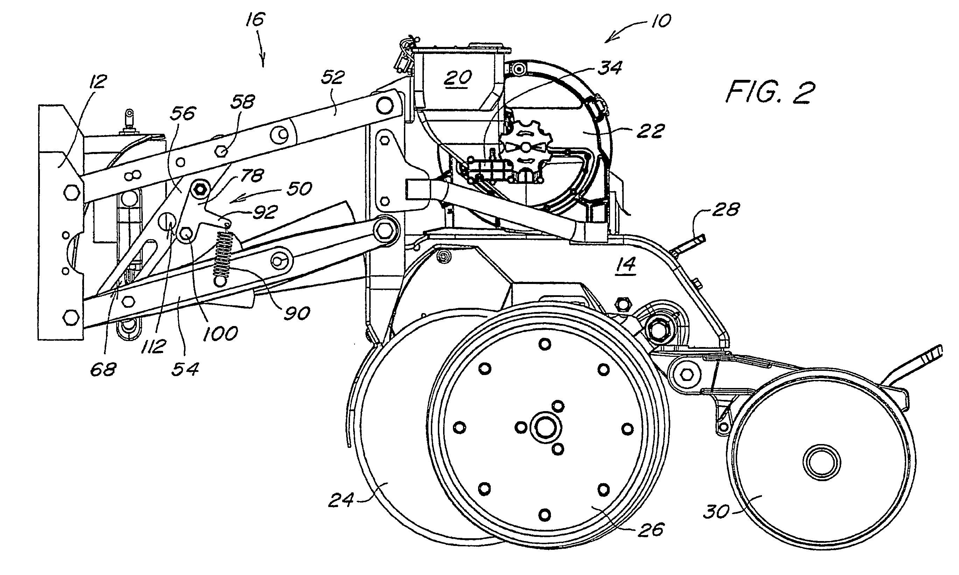

Das Stellglied 78 enthält zwei, durch die Betätigungs- und Arretiereinrichtung 100 vorgegebene Stellungen. Eine Normalstellung, dargestellt in Figur 1, und eine Haltestellung, dargestellt in Figur 2. In der Normalstellung befindet sich die Arretierungsgewindemutter 108 in einer ausgeweiteten Öffnung 112. In der Normalstellung, wenn die Säeinheit abgesenkt ist, spannt die Feder 90 das Stellglied 78 entgegen den Uhrzeigersinn vor. Dadurch zieht der Arretierungsteil der Betätigungs- und Arretiereinrichtung 100 die Arretierungsstrebe 56 entgegen den Uhrzeigersinn, so dass die Gleitbuchse 72 gegen den Rand der Aussparung 68 und vom Haken 70 weg gedrückt wird.

Für die Haltestellung greift der Landwirt den Betätigungsteil der Betätigungs- und Arretiereinrichtung 100 und zieht das Stellglied 78 von der Arretierungsstrebe 56 weg, so dass die Arretierungsgewindemutter 108 aus der ausgeweiteten Öffnung 112 entfernt wird. Die Arretierungsgewindemutter 108 wird dann hinter der Arretierungsstrebe 56 positioniert, wie es in Figur 2 dargestellt ist. In dieser Haltestellung, wenn die Säeinheit angehoben ist, spannt die Feder 90 das Stellglied 78 in Uhrzeigerrichtung vor. Dadurch drückt der Arretierungsteil der Betätigungs- und Arretiereinrichtung 100 die Arretierungsstrebe 56 in Richtung des Uhrzeigersinns, so dass die Gleitbuchse 72 gegen den Rand der Aussparung 68 und zum Haken 70 hin gedrückt wird. Wenn die Säeinheit ihre Haltestellung einnimmt, greift die Gleitbuchse 72 in den Haken 70 ein und hält die Säeinheit in ihrer Haltestellung.

## Patentansprüche

1. Halterungseinrichtung für eine Säeinheit, mit einem Parallelogrammgestänge (16), welches eine obere und eine untere Führungsstrebe (52, 54) aufweist, einer Arretierungsstrebe (56), welche sich zwischen der oberen und der unteren Führungsstrebe (52, 54) erstreckt, schwenkbar auf einer oberen Schwenkachse (58) an der oberen Führungsstrebe (52) montiert ist und einen Haken (70) aufweist, und wobei die untere Führungsstrebe (54) ein Führungsteil (72) enthält, welches an der Arretierungsstrebe (56) anliegt, und mit einem Stellglied (78), **dadurch gekennzeichnet, dass** das Stellglied (78) schwenkbar zwischen der Schwenkachse (58) und dem Haken (70) an die Arretierungsstrebe (56) gekoppelt und in Richtung der anderen Führungsstrebe (54) durch eine Feder (90) vorgespannt ist und dass das Stellglied (78) zwei Stellungen zum Eingreifen in die Arretierungsstrebe (56) aufweist, eine Normalstellung, in der das Stellglied (78) den Haken (70) der Arretierungsstrebe (56) vom Führungsteil (72) weg vorspannt und eine Haltestellung, in der das Stellglied (78) den Haken (70) der Arretierungsstrebe (56) zum Führungsteil (72) hin vorspannt.

2. Halterungseinrichtung nach Anspruch 1, **dadurch gekennzeichnet, dass** die Arretierungsstrebe (56) mit einer Aussparung (68) versehen ist, in welche das Führungsteil (72) eingeführt und durch welche der Haken (70) ausgebildet ist.

3. Halterungseinrichtung nach Anspruch 2, **dadurch gekennzeichnet, dass** die Aussparung (68) J-förmig ausgebildet ist.

4. Halterungseinrichtung nach einem der vorhergehenden Ansprüche, **dadurch gekennzeichnet, dass** das Stellglied mit einem Arretierungselement (108) versehen ist, welches in die Arretierungsstrebe (56) eingreift.

5. Halterungseinrichtung nach Anspruch 4, **dadurch gekennzeichnet, dass** die Arretierungsstrebe (56) mit einer Öffnung (112) versehen ist, in welche das Arretierungselement (108) eingeführt ist, wenn das Stellglied (78) in der Normalposition ist.

6. Halterungseinrichtung nach einem der vorhergehenden Ansprüche, **dadurch gekennzeichnet, dass** das Stellglied (78) spielbehaftet an die Arretierungsstrebe (56) schwenkbar gekoppelt ist.

7. Halterungseinrichtung nach einem der vorhergehenden Ansprüche, **dadurch gekennzeichnet, dass** das Stellglied (78) mit einer Langlochöffnung (88) versehen ist, in welche eine an die Arretierungsstrebe (56) montierte zylindrische Buchse (80) eingeführt ist, wobei die Buchse (80) das Stellglied (78) schwenkbar an die Arretierungsstrebe (56) koppelt.

8. Halterungseinrichtung nach einem der Ansprüche 2 bis 7, **dadurch gekennzeichnet, dass** das Führungsteil (72) eine in der Aussparung (68) positionierte Gleitbuchse ist, wobei die Gleitbuchse an die untere Führungsstrebe (54) montiert ist.

9. Halterungseinrichtung nach einem der Ansprüche 4 bis 8, **dadurch gekennzeichnet, dass** das Arretierungselement (108) mit einem Arretierungsrand (110) versehen ist.

10. Halterungseinrichtung nach einem der Ansprüche 4 bis 9, **dadurch gekennzeichnet, dass** das Arretierungselement (108) an einen Montagebolzen (102) montiert ist, welcher das Stellglied (78) durchläuft.

11. Halterungseinrichtung nach Anspruch 10, **dadurch gekennzeichnet, dass** der Montagebolzen (102) mit einer Abstandshülse (104) zur Ausbildung einer Betätigungseinrichtung für das Stellglied (78) versehen ist.

12. Halterungseinrichtung nach einem der vorhergehenden Ansprüche, **dadurch gekennzeichnet, dass** das Stellglied (78) mit einer Betätigungseinrichtung versehen ist.

13. Halterungseinrichtung nach Anspruch 12, **dadurch gekennzeichnet, dass** sich die Betätigungseinrichtung vom Parallelogrammgestänge (16) aus nach außen hin erstreckt.

14. Halterungseinrichtung nach einem der vorhergehenden Ansprüche, **dadurch gekennzeichnet, dass** das Parallelogrammgestänge (16) ein rechtes und ein linkes Führungsgestänge aufweist, wobei eines der Führungsgestänge die obere und die untere Führungsstrebe (52, 54) enthält.

## Claims

1. Fixing device for a sowing unit, having a parallelogram linkage (16) which has an upper and a lower guide strut (52, 54), a locking strut (56) which extends between the upper and the lower guide strut (52, 54), is mounted pivotably on an upper pivot axle (58) on the upper guide strut (52) and has a hook (70), and the lower guide strut (54) containing a guide part (72) which abuts on the locking strut (56), and having an actuator (78), **characterised in that** the actuator (78) is coupled pivotably between the pivot axle (58) and the hook (70) to the locking strut (56) and is pretensioned in the direction of the other guide strut (54) by means of a spring (90) and **in that** the actuator (78) has two positions for engaging in the locking strut (56), a normal position in which the actuator (78) pretensions the hook (70) of the locking strut (56) away from the guide part (72), and a fixing position in which the actuator (78) pretensions the hook (70) of the locking strut (56) towards the guide part (72).

2. Fixing device according to claim 1, **characterised in that** the locking strut (56) is provided with a cavity (68) into which the guide part (72) is introduced and by means of which the hook (70) is formed.

3. Fixing device according to claim 2, **characterised in that** the cavity (68) has a J-shaped configuration.

4. Fixing device according to one of the preceding claims, **characterised in that** the actuator is provided with a locking element (108) which engages in the locking strut (56).

5. Fixing device according to claim 4, **characterised in that** the locking strut (56) is provided with an opening (112) into which the locking element (108) is introduced when the actuator (78) is in the normal position.

6. Fixing device according to one of the preceding claims, **characterised in that** the actuator (78) is coupled pivotably to the locking strut (56) subject to clearance.

7. Fixing device according to one of the preceding claims, **characterised in that** the actuator (78) is provided with a slot opening (88) into which a cylindrical bush (80) which is mounted on the locking strut (56) is introduced, the bush (80) coupling the actuator (78) pivotably to the locking strut (56).

8. Fixing device according to one of the claims 2 to 7, **characterised in that** the guide part (72) is a slide bush which is positioned in the cavity (68), the slide bush being mounted on the lower guide strut (54).

9. Fixing device according to one of the claims 4 to 8, **characterised in that** the locking element (108) is provided with a locking edge (110).

10. Fixing device according to one of the claims 4 to 9, **characterised in that** the locking element (108) is mounted on a mounting bolt (102) which passes through the actuator (78).

11. Fixing device according to claim 10, **characterised in that** the mounting bolt (102) is provided with a spacer bush (104) in order to form an actuation device for the actuator (78).

12. Fixing device according to one of the preceding claims, **characterised in that** the actuator (78) is provided with an actuation device.

13. Fixing device according to claim 12, **characterised in that** the actuation device extends from the parallelogram linkage (16) to the exterior.

14. Fixing device according to one of the preceding claims, **characterised in that** the parallelogram linkage (16) has a right and a left guide linkage, one of the guide linkages containing the upper and the lower guide strut (52, 54).

## Revendications

1. Dispositif de fixation pour un élément semeur, comportant un parallélogramme articulé (16), qui comporte des tiges de guidage supérieure et inférieure (52, 54), une tige de blocage (56), qui est située entre les tiges de guidage supérieure et inférieure (52, 54), est montée pivotante sur un premier axe de pivotement (58) supérieur contre la tige de guidage supérieure (52) et comporte un crochet (70), la tige de guidage inférieure (54) contenant un élément de guidage (72) qui est en appui contre la tige de blocage (56), et comportant un organe de réglage (78), **caractérisé en ce que** l'organe de réglage (78) est couplé de manière pivotante entre l'axe de pivotement (58) et le crochet (70) sur la tige de blocage (56) et est précontraint par un ressort (90) vers l'autre tige de guidage (54), et **en ce que** l'organe de réglage (78) possède deux positions pour entrer en prise avec la tige de blocage (56), à savoir une position normale dans laquelle l'organe de réglage (78) précontraint le crochet (70) de la tige de blocage (56) pour l'écarter de l'élément de guidage (72), et une position de fixation dans laquelle l'organe de réglage (78) précontraint le crochet (70) de la tige de blocage (56) vers l'élément de guidage (72).

2. Dispositif de fixation selon la revendication 1, **caractérisé en ce que** la tige de blocage (56) comporte un évidement (68), dans lequel est introduit l'élément de guidage (72) et par lequel est formé le crochet (70).

3. Dispositif de fixation selon la revendication 2, **caractérisé en ce que** l'évidement (68) est réalisé en forme de J.

4. Dispositif de fixation selon l'une quelconque des revendications précédentes, **caractérisé en ce que** l'organe de réglage est muni d'un élément de blocage (108), qui s'engage dans la tige de blocage (56).

5. Dispositif de fixation selon la revendication 4, **caractérisé en ce que** la tige de blocage (56) comporte une ouverture (112) dans laquelle est engagé l'élément de blocage (108) lorsque l'organe de réglage (78) est dans la position normale.

6. Dispositif de fixation selon l'une quelconque des revendications précédentes, **caractérisé en ce que** l'organe de réglage (78) est couplé à la tige de blocage (56) de manière pivotante avec un jeu.

7. Dispositif de fixation selon l'une quelconque des revendications précédentes, **caractérisé en ce que** l'organe de réglage (78) est muni d'un trou oblong (88), dans lequel est introduite une douille (80) cylindrique montée sur la tige de blocage (56), ladite douille (80) couplant l'organe de réglage (78) de manière pivotante à la tige de blocage (56).

8. Dispositif de fixation selon l'une quelconque des revendications 2 à 7, **caractérisé en ce que** l'élément de guidage (72) est une douille anti-friction positionnée dans l'évidement (68), la douille anti-friction étant montée sur la tige de guidage inférieure (54).

9. Dispositif de fixation selon l'une quelconque des revendications 4 à 8, **caractérisé en ce que** l'élément de blocage (108) est muni d'un bord de blocage (110).

10. Dispositif de fixation selon l'une quelconque des revendications 4 à 9, **caractérisé en ce que** l'élément de blocage (108) est monté sur un boulon de montage (102), qui passe à travers l'organe de réglage (78).

11. Dispositif de fixation selon la revendication 10, **caractérisé en ce que** le boulon de montage (102) est muni d'un manchon d'écartement (104) pour réaliser un dispositif de manoeuvre pour l'organe de réglage (78).

12. Dispositif de fixation selon l'une quelconque des revendications précédentes, **caractérisé en ce que** l'organe de réglage (78) est muni d'un dispositif de manoeuvre.

13. Dispositif de fixation selon la revendication 12, **caractérisé en ce que** le dispositif de manoeuvre s'étend à partir du parallélogramme articulé (16) vers l'extérieur.

14. Dispositif de fixation selon l'une quelconque des revendications précédentes, **caractérisé en ce que** le parallélogramme articulé (16) comporte une tringlerie de guidage droite et une tringlerie de guidage gauche, l'une des tringleries de guidage contenant les tiges de guidage supérieure et inférieure (52, 54).
